# EUROPEAN PATENT SPECIFICATION

(11) **EP 3 115 977 B1**
(45) Date of publication and mention of the grant of the patent: **28.02.2018**
(21) Application number: 15759026.6
(22) Date of filing: 02.03.2015
(51) Int. Cl.: G08B 17/00, H04B 1/16, H04W 52/02

(54) **WIRELESS COMMUNICATION DEVICE**
DRAHTLOSKOMMUNIKATIONSVORRICHTUNG
DISPOSITIF DE COMMUNICATION SANS FIL

(30) Priority: 03.03.2014 JP 2014040964
(43) Date of publication of application: 11.01.2017
(73) Proprietor: Panasonic Intellectual Property Management Co., Ltd., Osaka-shi, Osaka 540-6207 (JP)
(72) Inventor: HOSHIBA, Keitaro, Osaka-shi Osaka 540-6207 (JP); KURITA, Masanori, Osaka-shi Osaka 540-6207 (JP); NAGATA, Masahiro, Osaka-shi Osaka 540-6207 (JP); MATSUMOTO, Kazuhiro, Osaka-shi Osaka 540-6207 (JP); NISHIO, Akihiko, Osaka-shi Osaka 540-6207 (JP); KOHROGI, Takeshi, Osaka-shi Osaka 540-6207 (JP)
(74) Representative: Appelt, Christian W.
(86) International application number: PCT/JP2015/001072
(87) International publication number: WO 2015/133112

(56) References cited:
- EP-A1- 2 541 994
- JP-A- 2011 101 295
- JP-A- 2011 176 481
- JP-A- 2012 004 826
- US-A1- 2007 232 366
- US-A1- 2010 061 431
- US-A1- 2013 137 422
- US-B1- 7 305 259

## Description

### Technical Field

The present invention relates generally to wireless communication devices and particularly to a wireless communication device performing intermittent reception.

### Background Art

In the past, there has been proposed a fire alarm system capable of prolonging a battery life by reducing power consumption while a fire has not been sensed (e.g., see JP 2009-251907 A, hereinafter referred to as "Document 1"). The fire alarm system disclosed in Document 1 includes multiple fire alarm devices. Each fire alarm device includes a fire sensing means for sensing a fire, a transmitting means for transmitting a wireless signal, a receiving means for receiving a wireless signal, a power supplying means for supplying power from a battery as a power supply to each means, and a control means. The control means activates the receiving means intermittently while the fire sensing means does not sense a fire. When failing to receive a wireless signal transmitted from another fire alarm device, the control means deactivates the receiving means.

The fire alarm device disclosed in Document 1 uses a battery as a power source. The communication device including a battery is demanded to be capable of operating for a long time without replacement of the battery.

US 2010/061431 A1 describes a radio frequency (RF) modem for a mobile communications device comprises a monitoring circuit; an RF circuit having a demodulator, the RF circuit being for receiving RF signals; a baseband processing unit, for processing baseband signals; and a controller. The RF modem can enter a sleep mode in which the monitoring circuit is operational and the RF circuit and the baseband processing unit are not operational. The controller is responsive to an indication from the monitoring circuit to control the RF modem to enter a monitoring mode in which the RF circuit is operational and the baseband processing unit is not operational. The RF circuit is configured for data reception in the monitoring mode. The controller then controls the RF modem to exit the monitoring mode and to enter a baseband processing mode in which the baseband processing unit is operational to process data signals provided by the RF circuit.

US 7 305 259 B1 describes a radio frequency (RF) transceiver having improved low power operating modes. The RF transceiver comprises: 1) a radio frequency (RF) modem section comprising: a) receive path circuitry for receiving and down-converting an incoming RF signal to thereby produce an incoming baseband signal; and b) transmit path circuitry for receiving and up-converting an outgoing baseband signal to thereby produce an outgoing RF signal; 2) a baseband section comprising baseband circuitry for receiving and processing the incoming baseband signal and for generating the outgoing baseband signal; and 3) a power-saving apparatus for determining that the baseband section is idle and, in response to the determination, reducing a power supply voltage providing power to the baseband section.

EP 2 541 994 A1 describes a wireless transmitter/receiver provided with: a local oscillator which oscillates at a predetermined local oscillator frequency; a mixer which mixes a local oscillation signal of the local oscillation frequency outputted from an output terminal of the local oscillator and a radio signal received by an antenna; a modulation circuit which modulates the local oscillator signal and generates a radio signal; and a transmission/reception switching unit which selectively switches over between a reception state in which the output terminal of the local oscillator is connected to the mixer and a transmission state in which the output terminal is connected to the antenna without passing through the mixer.

US 2013/137422 A1 describes a wireless communication apparatus that includes a power switch unit that switches a power supplied from a battery, and a timer unit that measures a time period through a power supplied from the battery. The power switch unit is turned on upon receiving a trigger for turning on the power supply and turned off upon receiving a trigger for turning off the power supply. When a wireless unit and a control unit are supplied with the power through the power switch unit in accordance with the trigger for turning on the power supply, the control unit controls to receive a wireless signal from a different wireless communication apparatus, and the control unit then sets a given value of the expiration of the time period in the timer unit and outputs the trigger for turning off the power supply to the power supply control unit.

US 2007/232366 A1 describes a mobile communication device that may receive wireless broadcast signals from a number of different base stations or transmitters. The device alternates its operation between a low-power mode and a higher-power mode to conserve battery power. The length of time the device remains in the sleep mode is its sleep interval. The sleep interval is a function of two components. One component is set by the wireless broadcast network and the other component is set by the carrier that provisions the mobile communications device. When the device awakens from the sleep mode, it can check the status of any notification messages. If there are any updates, then it will process them. If there are no updates, then it will return to the low-power mode.

### Summary of Invention

In view of the above insufficiency, an objective of the present invention would be to propose a wireless communication device operating with lowered power consumption.

To solve the above problem, the wireless communication device of one aspect in accordance with the present invention includes a timer and a communicator. The timer is configured to output a first interrupt signal periodically. The communicator includes a memory storing reception settings, and is configured to, when receiving the first interrupt signal, perform intermittent reception for a wireless signal by use of the reception settings stored in the memory.

### Brief Description of Drawings

**FIG. 1** is a schematic block diagram of **Embodiment 1.**
**FIG. 2** is a diagram of change in consumed current of **Embodiment 1.**
**FIG. 3** is a schematic block diagram of **Embodiment 2.**
**FIG. 4** is a diagram of change in consumed current of **Embodiment 2.**
**FIG. 5** is a schematic block diagram of **Embodiment 3.**
**FIG. 6** is a schematic block diagram of **Embodiment 4.**

### Description of Embodiments

Wireless communication devices of the present embodiments may be applied to devices performing wireless communication by use of batteries as their power sources like fire alarm devices of fire alarm systems, for example. Such a fire alarm device includes a wireless communication device, an antenna, a sensor for sensing a fire, a notifier for giving fire alarm, and a transceiver for transmitting and receiving wireless signals, and a battery. The fire alarm devices may be installed on a ceiling or the like of a building structure. The fire alarm devices use batteries as their power sources, and are thus demanded to operate for a long time without replacement of batteries. The fire alarm devices perform intermittent reception for wireless signals sent from other fire alarm devices while their sensors do not sense a fire, thereby reducing their power consumptions. The following description relates to a wireless communication device performing intermittent reception for a wireless signal. Note that the wireless communication device is not limited to being applied to a fire alarm device, but may be applied to a communication device (e.g., a communication device for performing automatic meter reading, energy management, telemetry, or telecontrol) of a system using wireless communication, for example.

### (Embodiment 1)

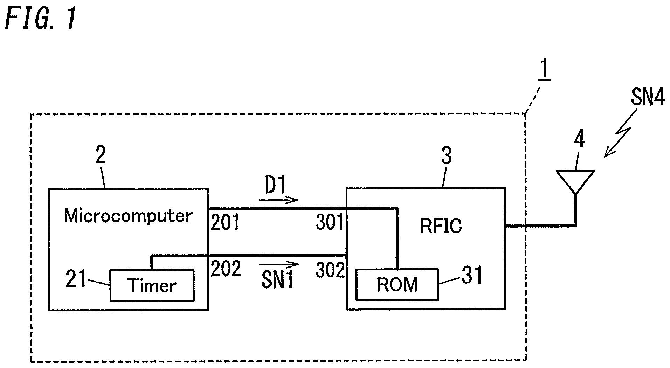

As shown in **FIG. 1****,** a wireless communication device **1** includes: a timer **21** configured to output a (first) interrupt signal **SN1** periodically; and a communicator **3.** The communicator **3** includes a memory **31** storing reception settings **D1,** and is configured to, when receiving the interrupt signal **SN1**, perform intermittent reception for a wireless signal by use of the reception settings **D1** stored in the memory **31.** The wireless communication device **1** further includes a controller **2,** and the controller **2** and the communicator **3** can operate with power supplied from a battery included in a fire alarm device.

According to the wireless communication device 1 of the present embodiment, the reception settings **D1** are not written to the communicator **3** each time the intermittent reception is performed, and the communicator **3** performs the intermittent reception by use of the reception settings **D1** stored in the memory **31** inside the communicator **3.** It is thus possible to realize the wireless communication device operating with a reduced power consumption.

The controller **2** includes a microcomputer, for example. The controller **2** may read a program from an ROM included in the microcomputer and execute it to control at least the communicator **3.** Note that, the controller **2** may further control a sensor, a notifier, and a transceiver. The controller **2** has an output port **201** connected to an input port **301** of the communicator **3** by use of an SPI (Serial Peripheral Interface). Note that, connection between the controller **2** and the communicator **3** is not limited to be made by the SPI, but may be made by appropriate means and/or methods.

The controller **2** includes the timer **21**. The timer **21** is configured to read a value of a counter thereof. The controller **2** outputs the interrupt signal **SN1** from an output port **202** each time the value of the counter reaches a predetermined value. The interrupt signal **SN1** is a control signal for activating the communicator **3** so that the communicator **3** can receive a radio wave **SN4** (wireless signal). In other words, the controller **2** is configured to output the interrupt signal **SN1** periodically.

After activated, the controller **2** outputs the reception settings **D1** from the output port **201.** The reception settings **D1** include information necessary for the communicator **3** to receive the radio wave **SN4.** For example, the reception settings **D1** contain about fifteen to twenty items (commands) such as information on a receiving frequency, designation of a receiving filter, and circuit settings of a receiving amplifier. Note that, contents of the reception settings **D1** of the present embodiment are not limited to the present examples, but may contain an appropriate number of appropriate items.

The communicator **3** includes an IC (Integrated Circuit) dedicated to wireless communication using as a transmission medium a radio wave corresponding to a main frequency band of specified low power radio stations. The communicator **3** is connected to an antenna **4.** The communicator **3** receives the radio wave **SN4** by way of the antenna **4.** Note that, the communicator **3** may be configured to perform appropriate wireless communication such as communication in conformity with IEEE 802.15.4 other than communication using the frequency band of the specified low power radio stations.

The communicator **3** includes the input port **301,** an input port **302** for interrupt, and the memory **31.** The memory **31** includes a volatile memory such as an SRAM (Static Random Access Memory) and a DRAM (Dynamic Random Access Memory). The memory **31** stores the reception settings **D1** inputted through the input port **301.** The volatile memory requires lower power than a non-volatile memory for rewriting retained information (stored contents). It is thus possible to reduce power consumption required for rewriting the stored contents of the memory **31.**

The communicator **3** has two modes which are a normal mode and another mode (sleep mode) lower in power consumption than the normal mode. In the following description, the mode lower in power consumption than the normal mode is referred to as a sleep mode. The communicator **3** does not perform operations except monitoring of the input port **302** while the communicator **3** operates in the sleep mode. The communicator **3** returns to the normal mode when receiving the interrupt signal **SN1** through the input port **302.** The communicator **3** supplies power necessary for operation of the memory **31** (i.e., retaining the stored contents) even while the communicator **3** operates in the sleep mode. Thereby the memory **31** retains the stored contents though the communicator **3** operates in the sleep mode.

When receiving the interrupt signal **SN1** through the input port **302,** the communicator **3** tries to receive the radio wave **SN4** through the antenna **4** by use of the reception settings **D1** stored in the memory **31.**

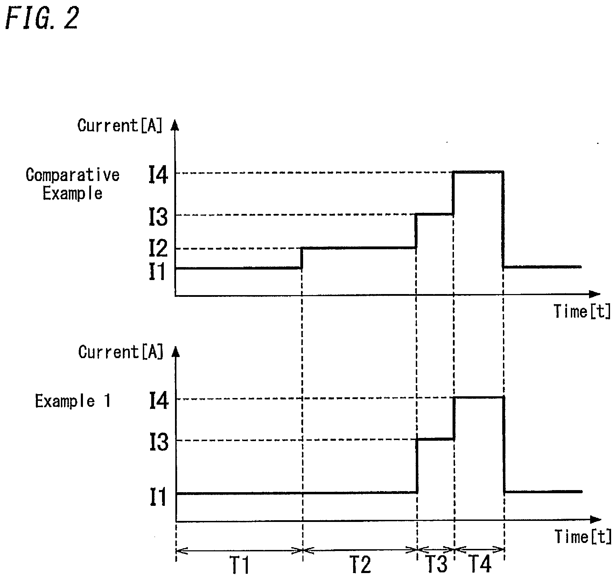

The following description referring to **FIG. 2** relates to change in consumed current within a time period consisting of time periods **T1** to **T4** in which the wireless communication device **1** performs the intermittent reception. Note that, to emphasize advantageous effects of the present embodiment, **Comparative Example** is used. **Comparative Example** relates to a wireless communication device **1** configured so that the controller **2** writes the reception settings **D1** to the memory **31** each time the value of the counter of the timer **21** reaches the predetermined value.

**FIG. 2** shows change in the consumed current of the wireless communication device **1** within the time period consisting of the time periods **T1** to **T4.** **FIG. 2** shows **Example 1** representing the wireless communication device **1** according to the configuration of the present embodiment. Note that, the wireless communication device **1** of **Comparative Example** operates in the same manner as the wireless communication device **1** of **Example 1** within the time periods **T1, T3,** and **T4** other than the time period **T2.**

When activation of the controller **2** is completed, the controller **2** controls the timer **21** to read the value of the counter (the time period **T1**). In the time period **T1**, the controller **2** does not perform operations other than controlling the timer **21.** In the time period **T1**, the communicator **3** operates in the sleep mode, and thus power is necessary for operating the controller **2** in the normal mode and the communicator **3** in the sleep mode. In this regard, current consumed by the wireless communication device **1** is supposed to have a current value **I1**.

According to the intermittent reception by the wireless communication device **1** of **Comparative Example,** when the value of the counter of the timer **21** reaches the predetermined value in the time period **T1,** the controller **2** writes the reception settings **D1** to the memory **31** (the time period **T2**). In the time period **T2,** the controller **2** writes the reception settings **D1** to the memory **31,** and therefore current consumed by the wireless communication device **1** of **Comparative Example** has a current value **I2** larger than **I1**. In contrast, in the wireless communication device **1** of **Example 1,** the controller **2** does not write the reception settings **D1** to the memory **31** within the time period **T2,** and therefore the current consumed by the wireless communication device **1** within the time period **T2** need not have a current value larger than **I1** which is smaller than **I2.** Consequently, the power consumption can be reduced. Note that, in the wireless communication device **1** of **Example 1,** the controller **2** does not write the reception settings **D1** to the memory **31** within the time period **T2,** and therefore to know an end timing of the time period **T2,** the timer **21** is configured so that the value of the counter reaches the predetermined value at time when the time period **T2** ends. In other words, the controller **2** of **Example 1** is configured so that a timing at which the value of the counter of the timer **21** reaches the predetermined value coincides with the end timing of the time period **T2.**

The controller **2** outputs the interrupt signal **SN1** to the communicator **3** (the time period **T3**) each time the value of the counter of the timer **21** reaches the predetermined value (i.e., a total of the time period **T1** and the time period **T2** passes). When receiving the interrupt signal **SN1,** the communicator **3** returns to the normal mode from the sleep mode. The communicator **3** starts preparation for receiving the radio wave **SN4** by use of the reception settings **D1** stored in the memory **31.** In the time period **T3,** the communicator **3** operates in the normal mode, and thus the current consumed by the wireless communication device **1** has a current value **I3** larger than **I2.**

After completion of the preparation, the communicator **3** tries to receive the radio wave **SN4** from the antenna **4** (the time period **T4**). In the time period **T4,** the communicator **3** receives the radio wave **SN4** and thus the current consumed by the wireless communication device **1** has a current value **I4** larger than **I3.**

When receiving the radio wave **SN4,** the communicator **3** outputs reception contents to the controller **2** and proceeds to the sleep mode. The controller **2** performs appropriate operation according to the reception contents (e.g., notification of occurrence of a fire, and transmission of an acknowledge signal in response to existence confirmation), and controls the timer **21** to start counting after the controller **2** completes that operation (the time period **T1** is restarted). By repeating processing spanning the time periods **T1** to **T4,** the wireless communication device 1 can receive the radio wave **SN4** intermittently.

As described above, the wireless communication device **1** of the present embodiment includes the memory **31** storing the reception settings **D1**, and tries to receive the radio wave **SN4** (wireless signal) by use of the reception settings **D1** stored in the memory **31.** In the wireless communication device **1,** the controller **2** does not write the reception settings **D1** to the communicator **3** every intermittent reception, but the communicator **3** can receive the radio wave **SN4** by use of the reception settings **D1** stored in the memory **31.** It is thus possible to realize the wireless communication device with reduced power consumption.

Preferably, the memory **31** includes a volatile memory.

The volatile memory requires lower power than a non-volatile memory for rewriting. It is thus possible to reduce power consumption required for writing the reception settings **D1** to the memory **31.**

Note that, the memory **31** may not be limited to including such a volatile memory, but may include a non-volatile memory. Such a non-volatile memory may include an EEPROM (Electrically Erasable Programmable Read-Only Memory) and a flash memory.

The wireless communication device **1** of the present embodiment further includes the controller **2** configured to control the communicator **3.** The communicator **3** has two operation states including the normal mode allowed to receive the radio wave **SN4** (wireless signal) and the sleep mode lower in power consumption than the normal mode. The communicator **3** is configured to, when receiving the interrupt signal **SN1** from the timer **21,** start the normal mode, output contents of the received radio wave **SN4** (wireless signal) to the controller **2** and then start the sleep mode. The memory **31** is configured to retain the reception settings **D1** even when the communicator **3** starts the sleep mode.

The communicator **3** operates in the sleep mode lower in power consumption than the normal mode, and it is thus possible to reduce power consumption in contrast to a communicator operating in the normal mode only. Additionally, the memory **31** retains the reception settings **D1** even while the communicator **3** operates in the sleep mode, and therefore the communicator **3** can receive the radio wave **SN4** by reading the reception settings **D1** from the memory **31** when the communicator **3** is switched from the sleep mode to the normal mode. The controller **2** need not write the reception settings **D1** to the memory **31** each time the communicator **3** performs reception operation. Therefore it is possible to reduce power necessary for the controller **2** to write the reception settings **D1** to the memory **31.** In summary, it is possible to reduce power necessary for the wireless communication device **1** to receive the radio wave **SN4.**

The controller **2** of the present embodiment is configured to write the reception settings **D1** to the memory **31** at a time interval longer than a cycle at which the timer **21** outputs the interrupt signal **SN1.**

For example, the number of times that the controller **2** writes the reception settings **D1** to the memory **31** is smaller than the number of times that the communicator **3** performs the intermittent reception within a predetermined time period. It is thus possible to reduce power necessary for the controller **2** to write the reception settings **D1** to the memory **31.** In other words, compared with a wireless communication device writing the reception settings **D1** to the memory **31** every intermittent reception, the wireless communication device **1** of the present embodiment can reduce power necessary in receiving the radio wave **SN4.** The controller **2** of the present embodiment writes the reception settings **D1** to the memory **31** when activated. However, there is no intent to limit the timing of writing the reception settings **D1** to the timing at which the controller **2** is activated. For example, after activated, the controller **2** may write the reception settings **D1** to the memory **31** each time desired time (e.g., several hours) passes. In other words, the controller **2** may write the reception settings **D1** to the memory **31** at a cycle (second cycle) longer than the cycle (first cycle) at which the timer **21** outputs the interrupt signal **SN1**. For example, when the desired time (length of time of one cycle of the second cycle) does not elapse but setting contents of the reception settings are changed, the controller **2** may write new reception settings **D1** to the memory **31.** In summary, if time longer than the cycle (length of time of one cycle of the first cycle) at which the timer **21** outputs the interrupt signal **SN1** passes from previous writing to the memory **31,** the controller **2** may write new reception settings **D1** to the memory **31.**

The wireless communication device **1** of the present embodiment uses power supplied from the battery, but alternatively may use power supplied from a commercial power supply.

### (Embodiment 2)

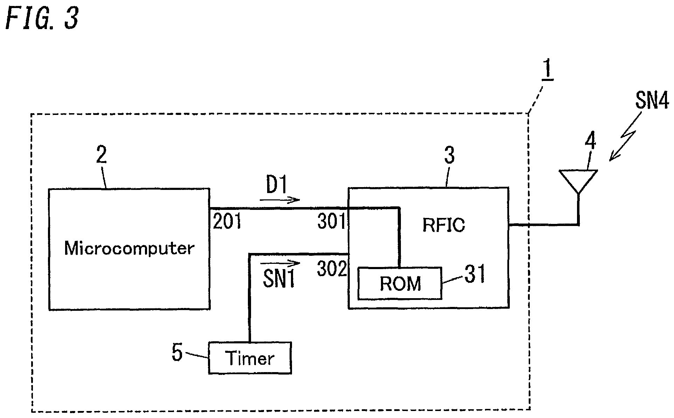

As shown in **FIG. 3****,** the wireless communication device **1** of the present embodiment includes the controller **2** configured to control the communicator **3,** and a timer **5** provided separate from the controller **2.** Note that, components common to the present embodiment and **Embodiment 1** are designated by common reference signs to avoid redundant explanations.

The timer **5** reads a value of a counter thereof, and outputs the interrupt signal **SN1** to the input port **302** for interrupt of the communicator **3** each time the value of the counter reaches a predetermined value. The timer **5** has a simple configuration which only reads the value of the counter and outputs the interrupt signal **SN1.** Therefore, the timer **5** is lower in power consumption during operation than the controller **2** including a microcomputer. Consequently, replacing the timer **21** (see **FIG. 1**) with the timer **5** can lead to reduction in power consumption necessary for the wireless communication device 1 to operate in the normal mode.

The controller **2** writes the reception settings **D1** to the memory **31** when activated, and then proceeds to the sleep mode. The wireless communication device **1** is different from **Embodiment 1** in using the timer **5** to return the communicator **3** from the sleep mode to the normal mode. Accordingly, the controller **2** continues the sleep mode while the communicator **3** performs the intermittent reception, and therefore it is possible to reduce a total amount of power consumed by the controller **2** operating in the normal mode.

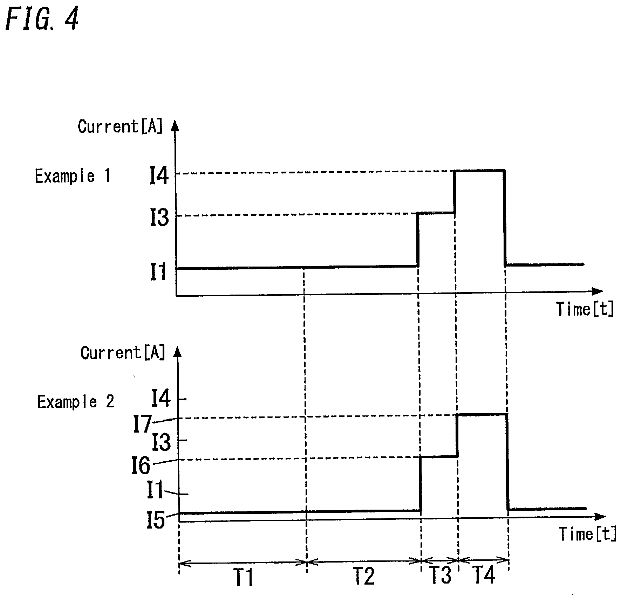

The following description referring to **FIG. 4** relates to change in consumed current within a time period consisting of time periods **T1** to **T4** in which the wireless communication device **1** performs the intermittent reception. Note that, to emphasize advantageous effects of the present embodiment, the present embodiment is compared with **Example 1.**

**FIG. 4** shows change in the consumed current of the wireless communication device **1** within the time period consisting of the time periods **T1** to **T4.** **FIG. 4** shows **Example 2** representing the wireless communication device **1** according to the configuration of the present embodiment. Note that, the same operations of the present embodiment as the wireless communication device **1** of **Example 1** are omitted to avoid redundant explanations.

Throughout the time period consisting of the time periods **T1** to **T4,** the controller **2** operates in the sleep mode, and the wireless communication device **1** of **Example 2** is lower in power consumption than the wireless communication device **1** of **Example 1.** In each of the time period **T1** and the time period **T2,** current necessary for the timer **5** to operate in its normal mode, for the controller **2** to operate in its sleep mode, and for the communicator **3** to operate in its sleep mode has a current value **I5** which is smaller than **I1**.

When the interrupt signal **SN1** outputted from the timer **5** is inputted into the communicator **3** operating in the sleep mode, the communicator **3** returns from the sleep mode to the normal mode to perform the intermittent reception (the time period **T3** and the time period **T4**). In the time period **T3,** the controller **2** still operates in the sleep mode, and thus the consumed current of the wireless communication device **1** has a current value **I6** which is smaller than the current value **I3** of **Embodiment 1.** In the time period **T4,** the controller **2** also operates in the sleep mode and thus the consumed current of the wireless communication device **1** has a current value **I7** which is smaller than the current value **I4** of **Embodiment 1.**

As described above, the wireless communication device **1** includes the timer **5,** and the controller **2** configured to control the communicator **3.** The controller **2** is configured to write the reception settings **D1** to the memory **31** when activated. The timer **5** is provided separate from the controller **2.** The controller **2** and the timer **5** are provided as separate devices, and the timer **5** periodically outputs the interrupt signal **SN1** to the communicator **3.** Thereby, the controller **2** is allowed to continue the sleep mode while the communicator **3** performs the intermittent reception. Consequently, it is possible to reduce power consumption of the wireless communication device **1.**

Note that, other components and functions of the wireless communication device **1** of the present embodiment are same as those of **Embodiment 1** and therefore explanations thereof are omitted.

### (Embodiment 3)

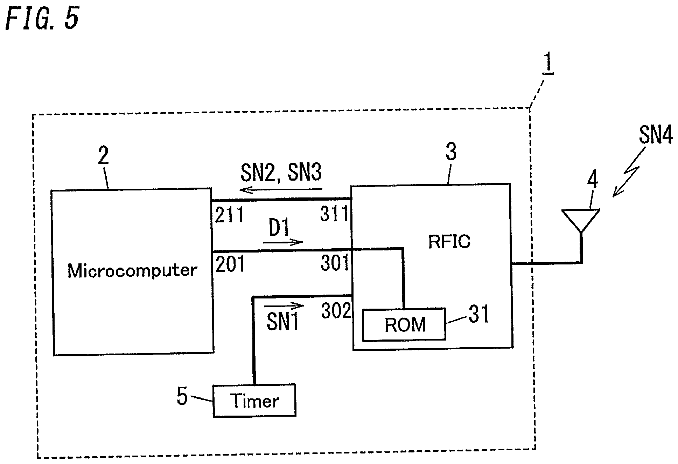

As shown in **FIG. 5****,** the communicator **3** of the wireless communication device **1** of the present embodiment includes an output port **311** for outputting a (second) interrupt signal **SN2** to the controller **2.** The output port **311** of the communicator **3** is connected to an interrupt input port **211** of the controller **2** by use of an SPI or the like. Note that, components common to the present embodiment and **Embodiment 2** are designated by common reference signs to avoid redundant explanations.

When detecting the radio wave **SN4** through the antenna **4,** the communicator **3** outputs the interrupt signal **SN2** to the controller **2.** When receiving the interrupt signal **SN2** while operating in the sleep mode, the controller **2** returns from the sleep mode to the normal mode. The controller **2** operates in the sleep mode until receiving the interrupt signal **SN2,** and it is thus possible to reduce the power consumption of the wireless communication device **1.**

When returning to the normal mode, the controller **2** allows the communicator **3** to receive the radio wave **SN4.** The communicator **3** converts the received radio wave **SN4** into an electric signal (e.g., a voltage signal) and outputs the resultant electric signal to the controller **2.** The controller **2** may perform operation such as processing according to received contents, and error analysis such as CRC (Cyclic Redundancy Check) for digital data such as packet data contained in the electric signal.

The communicator **3** can receive the radio wave **SN4** while operating normally. However, if the communicator **3** cannot operate normally due to malfunction or the like, there may be a probability that the communicator **3** fails to receive the radio wave **SN4.** When failing to receive the radio wave **SN4** at a timing to receive the radio wave **SN4,** the communicator **3** outputs a (third) interrupt signal **SN3.** When receiving the interrupt signal **SN3,** the controller **2** informs persons around the fire alarm devices of abnormality of the communicator **3** by blinking a lamp exposed outside the fire alarm device, for example.

As described above, the communicator **3** is configured to, when receiving the radio wave **SN4** (wireless signal), output the (second) interrupt signal **SN2.** The controller **2** operates in the sleep mode until receiving the interrupt signal **SN2.** Therefore, the power consumption of the wireless communication device **1** can be reduced.

The communicator **3** is configured to output the (third) interrupt signal **SN3** when failing to receive the radio wave **SN4** (wireless signal) at the timing to receive the radio wave **SN4** (wireless signal). When failing to receive the radio wave **SN4** due to malfunction or the like, the communicator **3** outputs the interrupt signal **SN3** to inform the controller **2** of abnormality of the communicator **3.**

Note that, other components and functions of the wireless communication device **1** of the present embodiment are same as those of **Embodiment 2** and therefore explanations thereof are omitted.

The controller **2** and the communicator **3** of the present embodiment may be applicable to **Embodiment 1** or **Embodiment 2.** In other words, **Embodiment 1** or **Embodiment 2** may be modified so that the communicator **3** outputs the interrupt signal **SN2** and the controller **2** operates in the normal mode in response to input of the interrupt signal **SN2.**

### (Embodiment 4)

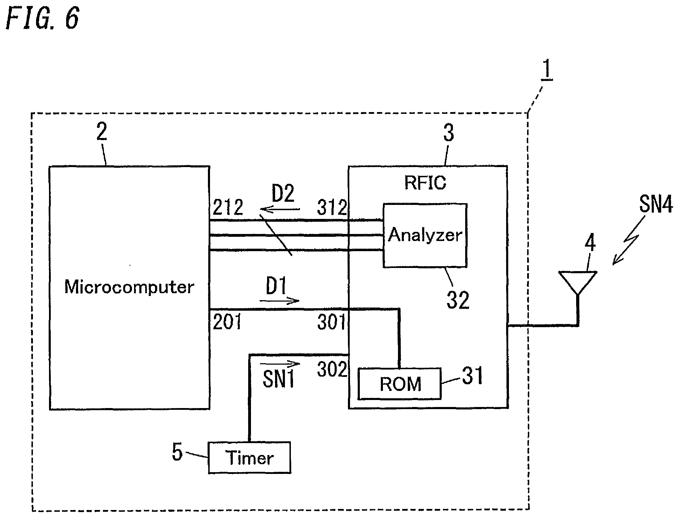

In the present embodiment, as shown in **FIG. 6****,** the communicator **3** of the wireless communication device **1** includes an output port **312** for outputting an analysis result **D2** to the controller **2.** The output port **312** of the communicator **3** is connected to an input port **212** of the controller **2** by use of an SPI or the like. Note that, components common to the present embodiment and **Embodiment 3** are designated by common reference signs to avoid redundant explanations.

The communicator **3** includes an analyzer **32** configured to analyze contents of the received radio wave **SN4.** The analyzer **32** is configured to analyze packet data contained in the radio wave **SN4.** The analyzer **32** may perform error analysis such as CRC, for example. The analyzer **32** is configured to output the analysis result **D2** to the controller **2.**

The controller **2** performs appropriate operation (e.g., giving notice of fire occurrence, and sending a response signal as a reply to existence confirmation) according to the analysis result **D2** outputted from the analyzer **32.** The present embodiment is different from the wireless communication device **1** of **Embodiment 2** in that the analyzer **32** analyzes the packet data contained in the radio wave **SN4,** and therefore the controller **2** need not undertake a task of analyzing the packet data. Hence, the power consumption of the controller **2** can be reduced.

As described above, the communicator **3** of the present embodiment includes the analyzer **32** configured to analyze packet data contained in the received radio wave **SN4** (wireless signal) to obtain an analysis result of the packet data and output the analysis result. The analyzer **32** analyzes the packet data and the controller **2** thus need not undertake a task of analyzing the packet data. Accordingly, it is possible to reduce the power consumption of the controller **2.**

Note that, other components and functions of the wireless communication device **1** of the present embodiment are same as those of **Embodiment 3** and therefore explanations thereof are omitted.

The controller **2** and the communicator **3** of the present embodiment may be applicable to any of **Embodiment 1** to **Embodiment 3.** In other words, any of **Embodiment 1** to **Embodiment 3** may be modified so that the communicator **3** includes the analyzer **32** and the communicator **3** outputs the analysis result **D2** to the controller **2.**

In **Embodiment 2** to **Embodiment 4,** the timer **5** is provided separate from the communicator **3.** However, the timer **5** may be incorporated in the communicator **3.**

## Claims

1. A wireless communication device (1), comprising:
a timer (5) configured to output a first interrupt signal (SN1) periodically;
a communicator (3) which includes a memory (31) storing reception settings (D1) and is configured to, when receiving the first interrupt signal (SN1), perform intermittent reception for a wireless signal (SN4) by use of the reception settings (D1) stored in the memory (31); and
a controller (2) configured to control the communicator (3),
wherein:
the communicator (3) has two operation states including a normal mode allowed to receive the wireless signal (SN4) and a sleep mode lower in power consumption than the normal mode, and is configured to, when receiving the first interrupt signal (SN1) from the timer (5), start the normal mode, output contents of the received wireless signal (SN4) to the controller (2) and then start the sleep mode;
the memory (31) is configured to retain the reception settings (D1) even when the communicator (3) starts the sleep mode;
the controller (2) is configured to write the reception settings (D1) to the memory (31) at a time interval longer than a cycle at which the timer (5) outputs the first interrupt signal (SN1);
the controller (2) is configured to write the reception settings (D1) to the memory (31) and then proceed to a sleep mode; and
the timer (5) is provided separate from the controller (2).

2. The wireless communication device (1) of claim 1, wherein
the memory (31) includes a volatile memory.

3. The wireless communication device (1) of claim 1, wherein
the communicator (3) is configured to output a second interrupt signal (SN2) to the controller (2) when receiving the wireless signal (SN4).

4. The wireless communication device (1) of any one of claims 1 to 3, wherein
the communicator (3) is configured to output a third interrupt signal (SN3) to the controller (2) when failing to receive the wireless signal (SN4) at a timing to receive the wireless signal (SN4).

5. The wireless communication device (1) of any one of claims 1 to 4, wherein
the communicator (3) includes an analyzer (32) configured to analyze packet data contained in the received wireless signal (SN4) to obtain an analysis result of the packet data and output the analysis result to the controller (2).

## Patentansprüche

1. Drahtlose Kommunikationsvorrichtung (1), die umfasst:
einen Zeitgeber (5), der dazu eingerichtet ist, periodisch ein erstes Interruptsignal (SN1) auszugeben;
einen Kommunikator (3), der einen Speicher (31) enthält, der Empfangsvorgabewerte (D1) speichert und dazu eingerichtet ist, bei Empfang des ersten Interruptsignals (SN1) unter Verwendung der Empfangsvorgabewerte (D1), die in dem Speicher (31) gespeichert sind, einen periodisch unterbrochenen Empfang für ein drahtloses Signal (SN4) durchzuführen; und
eine Steuereinrichtung (2), die dazu eingerichtet ist, den Kommunikator (3) zu steuern,
wobei:
der Kommunikator (3) zwei Betriebszustände aufweist, die einen normalen Modus, der es gestattet, das drahtlose Signal (SN4) zu empfangen, und einen Schlafmodus beinhalten, der weniger Energie verbraucht als der normale Modus, und dazu eingerichtet ist, bei Empfang des ersten Interruptsignals (SN1) von dem Zeitgeber (5), den normalen Modus zu beginnen, Inhalte des empfangenen drahtlosen Signals (SN4) an die Steuereinrichtung (2) auszugeben und anschließend den Schlafmodus zu beginnen;
der Speicher (31) dazu eingerichtet ist, die Empfangsvorgabewerte (D1) auch dann zu behalten, wenn der Kommunikator (3) den Schlafmodus beginnt;
die Steuereinrichtung (2) dazu eingerichtet ist, die Empfangsvorgabewerte (D1) mit einem Zeitintervall in den Speicher (31) zu schreiben, das länger ist als ein Zyklus, in dem der Zeitgeber (5) das erste Interruptsignal (SN1) ausgibt,;
die Steuereinrichtung (2) dazu eingerichtet ist, die Empfangsvorgabewerte (D1) in den Speicher (31) zu schreiben und anschließend in einen Schlafmodus zu gehen; und
der Zeitgeber (5) getrennt von der Steuereinrichtung (2) vorgesehen ist.

2. Drahtlose Kommunikationsvorrichtung (1) nach Anspruch 1, wobei der Speicher (31) einen flüchtigen Speicher beinhaltet.

3. Drahtlose Kommunikationsvorrichtung (1) nach Anspruch 1, wobei
der Kommunikator (3) dazu eingerichtet ist, ein zweites Interruptsignal (SN2) an die Steuereinrichtung (2) auszugeben, wenn das drahtlose Signal (SN4) empfangen wird.

4. Drahtlose Kommunikationsvorrichtung (1) nach einem beliebigen der Ansprüche 1 bis 3, wobei der Kommunikator (3) dazu eingerichtet ist, ein drittes Interruptsignal (SN3) an die Steuereinrichtung (2) auszugeben, wenn es nicht gelingt, das drahtlose Signal (SN4) in einem Zeittakt zu empfangen, in dem das drahtlose Signal (SN4) zu empfangen ist.

5. Drahtlose Kommunikationsvorrichtung (1) nach einem beliebigen der Ansprüche 1 bis 4, wobei der Kommunikator (3) einen Analysator (32) enthält, der dazu eingerichtet ist, Paketdaten zu analysieren, die in dem aufgenommenen drahtlosen Signal (SN4) enthalten sind, um ein Analyseergebnis der Paketdaten zu erhalten und das Analyseergebnis an die Steuereinrichtung (2) auszugeben.

## Revendications

1. Dispositif de communication sans fil (1), comprenant :
un temporisateur (5) configuré de manière à fournir en sortie un premier signal d'interruption (SN1), périodiquement ;
un communicateur (3) qui inclut une mémoire (31) stockant des réglages de réception (D1), et qui est configuré de manière à, lors de la réception du premier signal d'interruption (SN1), mettre en oeuvre une réception intermittente d'un signal sans fil (SN4) en utilisant les réglages de réception (D1) stockés dans la mémoire (31) ; et
un contrôleur (2) configuré de manière à commander le communicateur (3),
dans lequel :
le communicateur (3) présente deux états de fonctionnement, incluant un mode normal autorisé à recevoir le signal sans fil (SN4), et un mode veille, dont la consommation d'énergie est inférieure à celle du mode normal, et est configuré de manière à, lorsqu'il reçoit le premier signal d'interruption (SN1) en provenance du temporisateur (5), démarrer le mode normal, fournir en sortie des contenus du signal sans fil reçu (SN4) au contrôleur (2), et ensuite démarrer le mode veille ;
la mémoire (31) est configurée de manière à conserver les réglages de réception (D1), y compris lorsque le communicateur (3) démarre le mode veille ;
le contrôleur (2) est configuré de manière à écrire les réglages de réception (D1) dans la mémoire (31), à un intervalle de temps plus long qu'un cycle au cours duquel le temporisateur (5) fournit en sortie le premier signal d'interruption (SN1) ;
le contrôleur (2) est configuré de manière à écrire les réglages de réception (D1) dans la mémoire (31), et à passer ensuite en mode veille ; et
le temporisateur (5) est fourni séparément du contrôleur (2).

2. Dispositif de communication sans fil (1) selon la revendication 1, dans lequel :
la mémoire (31) inclut une mémoire volatile.

3. Dispositif de communication sans fil (1) selon la revendication 1, dans lequel :
le communicateur (3) est configuré de manière à fournir en sortie un deuxième signal d'interruption (SN2) au contrôleur (2), lors de la réception du signal sans fil (SN4).

4. Dispositif de communication sans fil (1) selon l'une quelconque des revendications 1 à 3, dans lequel :
le communicateur (3) est configuré de manière à fournir en sortie un troisième signal d'interruption (SN3) au contrôleur (2), lorsque la réception du signal sans fil (SN4) échoue au cours d'une temporisation de réception du signal sans fil (SN4).

5. Dispositif de communication sans fil (1) selon l'une quelconque des revendications 1 à 4, dans lequel :
le communicateur (3) inclut un analyseur (32) configuré de manière à analyser des données de paquets contenues dans le signal sans fil reçu (SN4) en vue d'obtenir un résultat d'analyse des données de paquets, et à fournir en sortie le résultat d'analyse au contrôleur (2).
